# EUROPEAN PATENT APPLICATION

(11) **EP 4 836 241 A1**
(43) Date of publication of application: **04.11.2026**
(21) Application number: 24911138.6
(22) Date of filing: 24.12.2024
(51) Int. Cl.: H02K 1/14, H02K 1/18, H02K 41/02

(54) **STATOR MAGNETIC CORE, STATOR ASSEMBLY, LINEAR MOTOR, SUSPENSION SYSTEM AND VEHICLE**

(30) Priority: 29.12.2023 CN 202311872248
(71) Applicant: BYD Company Limited, Shenzhen, Guangdong 518118 (CN)
(72) Inventor: LIAN, Yubo, Shenzhen, Guangdong 518118 (CN); LIAO, Yinsheng, Shenzhen, Guangdong 518118 (CN); SUN, Xianmeng, Shenzhen, Guangdong 518118 (CN); ZHANG, Feng, Shenzhen, Guangdong 518118 (CN); CHANG, Chao, Shenzhen, Guangdong 518118 (CN)
(74) Representative: Mathys & Squire
(86) International application number: PCT/CN2024/141964
(87) International publication number: WO 2025/140213

(57) **Abstract**

A stator magnetic core, a stator assembly, a linear motor, a suspension system, and a vehicle. The stator magnetic core comprises: a stator tooth part and a stator yoke part. The stator tooth part comprises a plurality of first laminations stacked in the axial direction of the stator magnetic core, and the stator yoke part is formed into a winding piece or a stacking piece, the stator yoke part being connected to the stator tooth part.

## Description

### CROSS-REFERENCE TO RELATED APPLICATIONS

The present disclosure claims priority to Chinese Patent disclosure No. 202311872248.2 filed on December 29, 2023, the entire contents of which are incorporated herein by reference.

### FIELD

The present disclosure relates to the technical field of motors, and in particular, to a stator magnetic core, a stator assembly, a linear motor, a suspension system and a vehicle.

### BACKGROUND

A linear motor is a mechanical device that directly converts electrical energy into linear motion. Linear motors are widely used in urban rail transit systems such as high-speed maglev trains, subways, and light rails, providing efficient and smooth linear motion. Linear motors have advantages such as direct drive, simple structure, and convenient maintenance.

### SUMMARY

The present disclosure aims to solve at least one of the technical problems existing in the related art. The present disclosure provides a stator magnetic core which can significantly reduce the eddy current losses in the stator magnetic core, thereby enhancing the thrust force and efficiency of a linear motor.

According to an embodiment of the present disclosure, a stator magnetic core includes: a stator tooth part and a stator yoke part. The stator tooth part includes a plurality of first laminations stacked in an axial direction of the stator magnetic core. The stator yoke part is formed into a winding piece or a stacking piece, and the stator yoke part is connected to the stator tooth part.

According to an embodiment of the present disclosure, the stator tooth part of the stator magnetic core is formed by stacking a plurality of first laminations in the axial direction to reduce the eddy current losses of the stator tooth part, and the stator yoke part is formed into a winding piece or a stacking piece to reduce the eddy current losses of the stator yoke part. In this way, the eddy current losses of the stator magnetic core can be significantly reduced, thereby enhancing the thrust force and efficiency of a linear motor.

According to some embodiments of the present disclosure, the stator yoke part is formed with a first connection structure, the stator tooth part is formed with a second connection structure, and the first connection structure mates with the second connection structure to realize a connection between the stator tooth part and the stator yoke part.

According to some embodiments of the present disclosure, the first connection structure and the second connection structure are mated by insertion.

According to some embodiments of the present disclosure, the first connection structure is formed into an insertion part, and the second connection structure is formed into an insertion hole.

According to some embodiments of the present disclosure, the second connection structure is provided with a plurality of insertion holes, the first connection structure is provided with a plurality of insertion parts, and the plurality of insertion parts correspond one-to-one with the plurality of insertion holes.

According to some embodiments of the present disclosure, the stator yoke part includes a yoke body and the insertion part. Along the stacking direction of the plurality of first laminations, the yoke body is arranged on one side of the stator tooth part, and the insertion part is connected to a side of the yoke body facing the stator tooth part.

According to some embodiments of the present disclosure, the stator tooth part is provided with a first central hole, the insertion hole is formed by an outward recess from the first central hole, and the insertion hole communicates with the first central hole.

According to some embodiments of the present disclosure, in a radial direction of the stator tooth part, a cross-sectional area of the insertion hole decreases in a direction toward the first central hole, and a shape of the insertion hole matches a shape of the insertion part.

According to some embodiments of the present disclosure, in a circumferential direction of the stator yoke part, the insertion part has two opposite first side walls, and ends of the two first side walls adjacent to the first central hole are spaced apart from an inner wall of the insertion hole.

According to some embodiments of the present disclosure, in a circumferential direction of the stator tooth part, the insertion hole has two opposite second side walls, the two second side walls are connected by a third side wall, and a recessed clearance slot is arranged at a corner between the third side wall and either of the two second side walls.

According to some embodiments of the present disclosure, an inner peripheral wall of the clearance slot is formed into an arc-shaped surface.

According to some embodiments of the present disclosure, at least one of a part of the stator yoke part is located on one side of the stator tooth part, thereby forming a winding slot between the stator yoke part and the stator tooth part, and the winding slot is configured to wind a coil.

According to some embodiments of the present disclosure, at least one of the stator tooth part and the stator yoke part is provided with a positioning protrusion.

According to some embodiments of the present disclosure, the positioning protrusion is formed on the stator tooth part.

According to some embodiments of the present disclosure, an outer peripheral wall of the stator tooth part is provided with at least one wire passing slot.

According to some embodiments of the present disclosure, the at least one wire passing slot includes a plurality of wire passing slots uniformly spaced apart.

According to some embodiments of the present disclosure, the stator yoke part is wound along a first circumferential direction, and an axis of the first circumferential direction is parallel or coincident with the axial direction.

According to some embodiments of the present disclosure, the stator yoke part includes a plurality of second laminations stacked in a second direction, and the axial direction intersects the second direction.

According to some embodiments of the present disclosure, the axial direction and the second direction are arranged perpendicularly.

According to some embodiments of the present disclosure, a first direction and the second direction are arranged perpendicularly.

The present disclosure also provides a stator assembly.

According to an embodiment of the present disclosure, a stator assembly includes: a stator magnetic core and a stator winding. The stator magnetic core is the stator magnetic core according to any of the above embodiments, and the stator winding is arranged on the stator tooth part and sleeves over the stator yoke part.

The present disclosure also provides a linear motor.

According to an embodiment of the present disclosure, a linear motor includes: a stator assembly and a forcer assembly. The stator assembly is the stator assembly according to any of the above embodiments; the forcer assembly is movably mated with the stator assembly.

The present disclosure also provides a suspension system including the linear motor according to any of the above embodiments, one of the stator assembly and the forcer assembly being configured to be connected to a vehicle body, and the other of the stator assembly and the forcer assembly being configured to be connected to a wheel.

The present disclosure also provides a vehicle including the suspension system according to any of the above embodiments.

The vehicle, the suspension system, the linear motor and the stator assembly have the same advantages over the related art as the aforementioned stator magnetic core, which will not be repeated here.

Additional aspects and advantages of the present disclosure will be partly given in the following description, partly become apparent from the following description, or be learned through practice of the present disclosure.

### BRIEF DESCRIPTION OF THE DRAWINGS

The above and/or additional aspects and advantages of the present disclosure will become apparent and easily understood from the following description of embodiments in conjunction with the accompanying drawings, in which:
FIG. 1 is a schematic structural diagram of a stator magnetic core according to some embodiments of the present disclosure;
FIG. 2 is an enlarged view of area A circled in FIG. 1;
FIG. 3 is a schematic diagram of the stator yoke part shown in FIG. 1;
FIG. 4 is a cross-sectional view taken along line B-B in FIG. 3;
FIG. 5 is a schematic diagram of the stator tooth part shown in FIG. 1;
FIG. 6 is an enlarged view of area C circled in FIG. 5;
FIG. 7 is a schematic diagram when the insertion part is inserted into the insertion hole.

Explanation of reference numerals:
Stator magnetic core 10; Axial direction X; Stator tooth part 1; First lamination 11; First central hole 12; Insertion hole 13; Second side wall 131; Third side wall 132; Clearance slot 133; Arc-shaped surface 1331; Wire passing slot 14; Stator yoke part 2; Yoke body 20; Insertion part 21; First side wall 211; Through hole 3; Positioning protrusion 31; Winding slot 4.

### DETAILED DESCRIPTION

Embodiments of the present disclosure are described in detail below, examples of which are shown in the accompanying drawings, wherein the same or similar reference numerals refer to the same or similar elements or elements having the same or similar functions throughout. The embodiments described below with reference to the accompanying drawings are exemplary and are intended to explain the present disclosure and will not be construed as limiting the present disclosure.

The following disclosure provides many different embodiments or examples for implementing different structures of the present disclosure. In order to simplify the disclosure of the present disclosure, components and arrangements of specific examples are described below. Of course, they are merely examples and are not intended to limit the present disclosure. Furthermore, the present disclosure may repeat reference numerals and/or letters in different examples. Such repetition is for the purpose of simplicity and clarity and does not in itself indicate a relationship between the various discussed embodiments and/or configurations. Furthermore, the present disclosure provides examples of various specific processes and materials, but those of ordinary skill in the art will recognize the applicability of other processes and/or the use of other materials. In the related art, during the operation of a linear motor, the stator magnetic core generates eddy current losses, thereby reducing the thrust force and efficiency of the linear motor.

To solve the above technical problem, some embodiments of the present disclosure provide a stator magnetic core 10 to enhance the thrust force and efficiency of a linear motor.

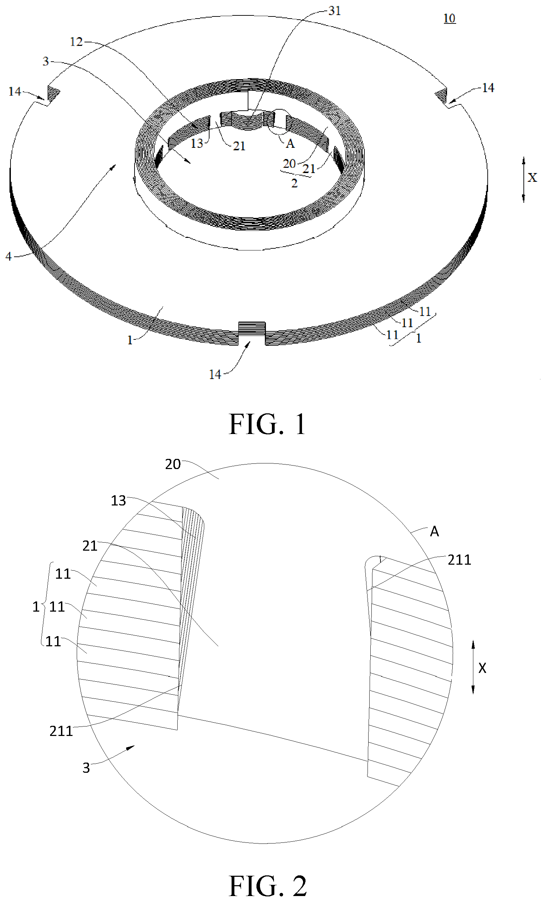

The stator magnetic core 10 according to the embodiments of the present disclosure is described below with reference to FIG. 1 to FIG. 7.

As shown in FIG. 1, the stator magnetic core 10 according to the embodiment of the present disclosure includes: a stator tooth part 1 and a stator yoke part 2.

The stator tooth part 1 includes a plurality of first laminations 11 stacked in an axial direction X of the stator magnetic core 10. The stator yoke part 2 is formed into a winding piece or a stacking piece. The stator yoke part 2 is connected to the stator tooth part 1.

Therefore, the eddy current losses of the stator magnetic core 10 can be significantly reduced, thereby enhancing the thrust force and efficiency of a linear motor.

For example, the stator magnetic core 10 includes: a stator tooth part 1 and a stator yoke part 2.

As shown in FIG. 1, the stator tooth part 1 and the stator yoke part 2 are connected. For example, the connection between the stator tooth part 1 and the stator yoke part 2 includes but is not limited to welding, insertion, snap-fit, or the two being integrally formed.

As shown in FIG. 2, the stator tooth part 1 includes a plurality of first laminations 11. The first laminations 11 may be silicon steel sheets. The plurality of first laminations 11 are stacked in the axial direction X of the stator magnetic core 10. Compared with a structure where the stator tooth part 1 is a single block of conductor, the stator tooth part 1 formed by stacking the plurality of first laminations 11 can reduce the eddy current losses of the stator tooth part 1.

The stator yoke part 2 is formed into a winding piece or a stacking piece. For example, the stator yoke part 2 being a winding piece means that the stator yoke part 2 is formed by spirally winding a whole piece of silicon steel sheet around an axis, or the stator yoke part 2 may be formed by stacking a plurality of second laminations. Compared with a structure where the stator yoke part 2 is a single block of conductor, the stator yoke part 2 formed into a winding piece or a stacking piece can reduce the eddy current losses of the stator yoke part 2.

For example, the stacking direction of the plurality of second laminations may be the same as or intersect with the stacking direction of the plurality of first laminations, which is not limited herein.

For example, the axis of the spiral winding of the winding piece may be parallel to the axial direction X of the stator magnetic core 10, thereby a plurality of turns of conductors of the winding piece are distributed along the radial direction of the stator magnetic core 10, i.e., the distribution direction of the plurality of turns of conductors in the radial direction of the stator yoke part 2 is different from the distribution direction of the plurality of first laminations 11. The distribution direction of the plurality of first laminations 11 corresponds to the stacking direction of the plurality of first laminations 11.

It will be noted that during the actual operation of the linear motor, the magnetic circuit direction inside the linear motor changes. Therefore, in some embodiments of the present disclosure, by setting the distribution direction of the plurality of turns of conductors in the radial direction of the stator yoke part 2 to be different from the distribution direction of the plurality of first laminations 11, the stator tooth part 1 and the stator yoke part 2 can reduce eddy current losses in different directions, thereby improving the operating efficiency of the linear motor.

In some embodiments, the stator yoke part 2 extends along the axial direction X and is located radially inward of the stator tooth part 1. It will be noted that the radial direction refers to, on a cross-section of the stator tooth part 1 perpendicular to the axial direction X, the direction passing through the geometric center of the stator tooth part 1.

For example, the stator tooth part 1 is configured as a ring structure, and the stator yoke part 2 is located radially inward of this ring structure. Alternatively, the stator tooth part 1 is configured as a polygonal structure. On a cross-section of this polygonal structure perpendicular to the axial direction X, the direction toward the geometric center of this polygonal structure is radially inward. Alternatively, the stator tooth part 1 can also be configured in other shapes, which are not limited herein.

As shown in FIG. 1, the stator tooth part 1 is provided with a first central hole 12. The stator yoke part 2 and the first central hole 12 mate to define a through hole 3 extending along the axial direction X, so as to facilitate installation of the stator magnetic core 10 by the through hole 3.

In the stator magnetic core 10 according to the embodiment of the present disclosure, the stator tooth part 1 is formed by stacking a plurality of first laminations 11 in the axial direction X to reduce the eddy current losses of the stator tooth part 1, and the stator yoke part 2 is formed into a winding piece or a stacking piece to reduce the eddy current losses of the stator yoke part 2. In this way, the eddy current losses of the stator magnetic core 10 can be significantly reduced, thereby enhancing the thrust force and efficiency of a linear motor.

In some embodiments, the stator yoke part 2 is formed with a first connection structure, the stator tooth part 1 is formed with a second connection structure, and the first connection structure mates with the second connection structure to realize the connection between the stator tooth part 1 and the stator yoke part 2.

Therefore, through the mating of the first connection structure and the second connection structure, the connection between the stator tooth part 1 and the stator yoke part 2 can be achieved, thereby reducing the difficulty of connecting the stator tooth part 1 and the stator yoke part 2 and helping to improve the connection efficiency between the stator tooth part 1 and the stator yoke part 2.

For example, the mating between the first connection structure and the second connection structure includes but is not limited to snap-fit, insertion, bolted connection, welding, or adhesive bonding.

In some embodiments, as shown in FIG. 1, FIG. 2, and FIG. 7, the first connection structure and the second connection structure are mated by insertion.

For example, the first connection structure is an insertion part 21, and the second connection structure is an insertion hole 13. Alternatively, the first connection structure is an insertion hole 13, and the second connection structure is an insertion part 21.

Therefore, the connection stability between the stator yoke part 2 and the stator tooth part 1 can be enhanced, and the insertion mating method is simpler, which helps to reduce costs.

In some embodiments, the first connection structure is formed into an insertion part 21, and the second connection structure is formed into an insertion hole 13.

Therefore, the fixed connection between the stator tooth part 1 and the stator yoke part 2 can be achieved through the insertion mating between the insertion part 21 and the insertion hole 13. Moreover, the structures of the insertion part 21 and the insertion hole 13 are simpler, which facilitates reducing the difficulty of setting the first connection structure and the second connection structure and helps to reduce setup costs.

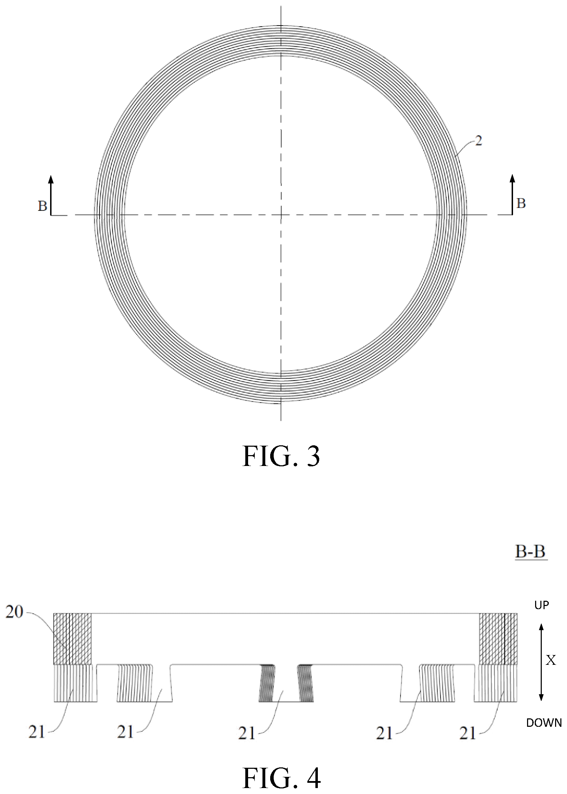

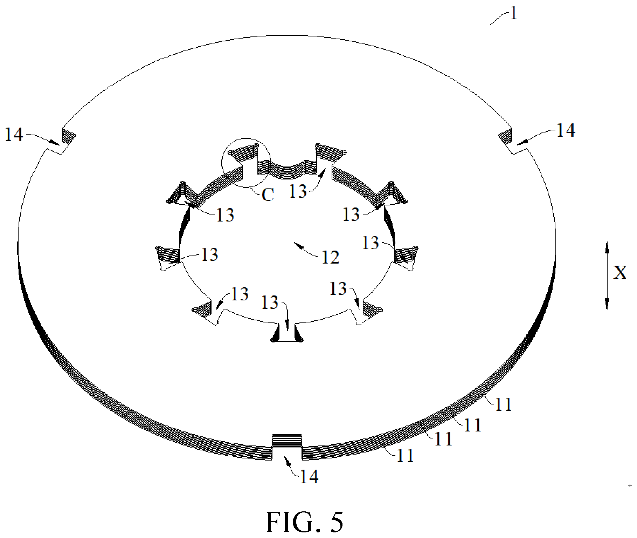

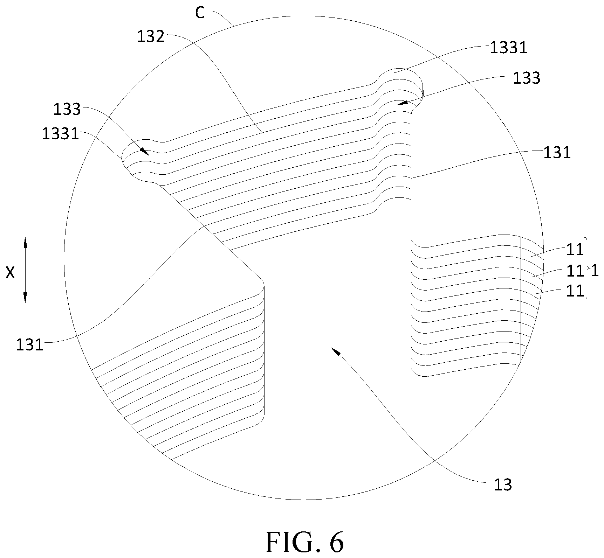

In some embodiments, as shown in FIG. 5 and FIG. 6, the stator tooth part 1 comprises a plurality of insertion holes 13. As shown in FIG. 3 and FIG. 4, the stator yoke part 2 comprises a plurality of insertion parts 21. The plurality of insertion parts 21 correspond one-to-one with the plurality of insertion holes 13.

Therefore, through the one-to-one insertion mating of the plurality of insertion parts 21 and the plurality of insertion holes 13, the fixed connection between the stator tooth part 1 and the stator yoke part 2 can be achieved, and it facilitates enhancing the connection stability between the stator tooth part 1 and the stator yoke part 2.

For example, the plurality of insertion parts 21 may be distributed at intervals along the circumferential direction of the stator yoke part 2, and the plurality of insertion holes 13 may be distributed at intervals along the circumferential direction of the first central hole 12. In this way, the connection stability between the stator tooth part 1 and the stator yoke part 2 can be enhanced in the circumferential direction of the stator magnetic core 10.

The distribution direction of the plurality of insertion parts 21 and the plurality of insertion holes 13 may also be the axial direction X or other directions, which is not limited herein.

In some embodiments, the stator tooth part 1 may comprise one insertion hole 13, the stator yoke part 2 may comprise one insertion part 21, and the insertion part 21 corresponds to the insertion hole 13. In this way, the connection between the stator tooth part 1 and the stator yoke part 2 can also be achieved.

In some embodiments, as shown in FIG. 4, the stator yoke part 2 comprises a yoke body 20 and a plurality of insertion parts 21. In the stacking direction of the plurality of first laminations 11 (i.e., the axial direction X), the yoke body 20 is arranged on one side of the stator tooth part 1, and the plurality of insertion parts 21 are connected to a side of the yoke body 20 facing the stator tooth part 1. For example, in the up-down direction shown in FIG. 4 (corresponding to the axial direction X), the yoke body 20 is arranged on the upper side of the stator tooth part 1, and the plurality of insertion parts 21 are connected to the lower side of the yoke body 20.

Therefore, the yoke body 20 and the plurality of insertion parts 21 are both located on one side of the stator tooth part 1 in the axial direction X of the stator magnetic core 10, and the plurality of insertion parts 21 are located on the side of the yoke body 20 facing the stator tooth part 1. In this way, the stator yoke part 2 can move along the axial direction X to achieve the corresponding insertion mating of the insertion parts 21 with the insertion holes 13.

In some embodiments, as shown in FIG. 1, the stator tooth part 1 is provided with a first central hole 12. The insertion hole 13 is formed by an outward recess from the first central hole 12, and the insertion hole 13 communicates with the first central hole 12.

For example, a side of the insertion hole 13 facing the first central hole 12 is open toward the first central hole 12. In this way, the insertion hole 13 can be formed by stamping from the radially inner side, thereby reducing the manufacturing difficulty of the insertion hole 13.

In some embodiments, in a radial direction of the stator tooth part 1, a cross-sectional area of the insertion hole 13 decreases in a direction toward the first central hole 12, and a shape of the insertion hole 13 matches a shape of the insertion part 21.

The cross-sectional area of the insertion hole 13 gradually decreases in the direction toward the through hole 3, i.e., the insertion hole 13 is formed into a dovetail slot structure that opens toward the radially inner side of the stator tooth part 1. In this way, the opening width on the side of the insertion hole 13 facing the first central hole 12 is smaller than the opening width on the side of the insertion hole 13 away from the first central hole 12. Since the shape of the insertion hole 13 matches the shape of the insertion part 21, the insertion part 21 is not easily detached after being inserted into the insertion hole 13, thereby enhancing the connection strength between the stator tooth part 1 and the stator yoke part 2.

In some embodiments, as shown in FIG. 2, in a circumferential direction of the stator yoke part 2, the insertion part 21 has two opposite first side walls 211. Ends of the two first side walls 211 adjacent to the first central hole 12 are spaced apart from an inner wall of the insertion hole 13.

Therefore, when the insertion part 21 is inserted into the insertion hole 13, interference between the insertion part 21 and the inner wall of the insertion hole 13 can be avoided, making it easier for the insertion part 21 to be inserted into the insertion hole 13, thereby improving the assembly efficiency of the two.

In some embodiments, as shown in FIG. 5 and FIG. 6, in a circumferential direction of the stator tooth part 1, the insertion hole 13 has a third side wall 132 and two opposite second side walls 131. The two second side walls 131 are connected by the third side wall 132. A recessed clearance slot 133 is arranged at a corner between the third side wall 132 and the corresponding second side wall 131.

Therefore, by arranging the clearance slot 133 at the corner between the third side wall 132 and the second side wall 131, i.e., setting a chamfer at the corner between the third side wall 132 and the corresponding second side wall 131, interference between the insertion part 21 and the corner between the third side wall 132 and the second side wall 131 when the insertion part 21 is inserted into the insertion hole 13 can be avoided, thereby making it easier for the insertion part 21 to be inserted into the insertion hole 13 to improve the assembly efficiency of the two.

In some embodiments, an inner peripheral wall of the clearance slot 133 is formed into an arc-shaped surface 1331.

Therefore, by forming the inner peripheral wall of the clearance slot 133 as an arc-shaped surface 1331, the manufacturing of the clearance slot 133 is facilitated, and it helps to reduce stress concentration.

In some embodiments, as shown in FIG. 1, at least a part of the stator yoke part 2 is located on one side of the stator tooth part 1, thereby forming a winding slot 4 between the stator yoke part 2 and the stator tooth part 1. The winding slot 4 is configured to wind a coil.

Therefore, the coil can be wound in the winding slot 4 defined between the stator yoke part 2 and the stator tooth part 1, thereby fully utilizing the space between the stator yoke part 2 and the stator tooth part 1 and helping to improve space utilization.

In some embodiments, as shown in FIG. 1, at least one of the stator tooth part 1 and the stator yoke part 2 is provided with a positioning protrusion 31.

It will be noted that the stator assembly comprises an installation structure. The stator magnetic core 10 is installed on the installation structure. The installation structure may be a shaft (the same applies below). The positioning protrusion 31 is configured to be positioned and mate with the installation structure. Therefore, the positioning protrusion 31 can serve a positioning and guiding role for the installation structure, reducing the assembly difficulty between the installation structure and the stator assembly, and helping to improve the assembly precision between the stator magnetic core 10 and the installation structure through the positioning protrusion 31.

In some embodiments, as shown in FIG. 1, the positioning protrusion 31 is formed on the stator tooth part 1.

For example, the positioning protrusion 31 is arranged on an inner wall of the first central hole 12. The positioning protrusion 31 may protrude radially inward from the first central hole 12 and extend along the axial direction X. In this way, when positioning with the installation structure, the positioning protrusion 31 can serve a limiting function in the circumferential direction of the first central hole 12 and a guiding function in the axial direction X of the through hole 3, thereby ensuring the motion stability of the installation structure.

In some embodiments, as shown in FIG. 1, an outer peripheral wall of the stator tooth part 1 is provided with a wire passing slot 14.

Therefore, by arranging the wire passing slot 14, it is convenient to arrange the three-phase wires of the stator magnetic core 10 in the wire passing slot 14. For example, the wire passing slot 14 is arranged on the outer peripheral wall of the stator tooth part 1 and extends along the axial direction X to avoid interference between the three-phase wires and the stator yoke part 2, and it helps to reduce the manufacturing difficulty of the wire passing slot 14.

For example, the wire passing slot 14 may be formed by stamping and laminating the first laminations 11. The wire passing slot 14 opens toward the radially outer side of the stator tooth part 1, and the three-phase wires can be installed into the wire passing slot 14 by its opening. At least part of the three-phase wires can be arranged along the axial direction X, reducing the difficulty of arranging the three-phase wires.

In some embodiments, the outer peripheral wall of the stator tooth part 1 is provided with a plurality of uniformly spaced wire passing slots 14.

Therefore, by arranging the wire passing slots 14, it is convenient to arrange the three-phase wires of the stator magnetic core 10 in the wire passing slots 14. For example, the outer peripheral wall of the stator tooth part 1 is provided with three wire passing slots 14 uniformly spaced along the circumferential direction of the stator tooth part 1. This facilitates the installation of the three-phase wires of the stator magnetic core 10. Furthermore, after the positioning protrusion 31 is positioned and mated with the installation structure, the three uniformly spaced wire passing slots 14 along the circumferential direction of the stator tooth part 1 can be ensured to be aligned.

In some embodiments, a winding direction or a stacking direction of the stator yoke part 2 is different from the stacking direction of the plurality of first laminations.

For example, the axis of the spiral winding of the winding piece or the stacking direction of the stacking piece may be different from the axial direction of the stator magnetic core 10. In this way, the plurality of turns of conductors of the winding piece are distributed along a direction different from the axial direction of the stator magnetic core 10, i.e., the distribution direction of the plurality of turns of conductors in the radial direction of the stator yoke part 2 is different from the distribution direction of the plurality of first laminations 11.

It will be noted that during the actual operation of the linear motor, the magnetic circuit direction inside the linear motor changes. Therefore, in some embodiments of the present disclosure, by setting the distribution direction of the plurality of turns of conductors of the winding piece to be different from the distribution direction (i.e., the axial direction) of the plurality of first laminations 11, the stator tooth part 1 and the stator yoke part 2 can reduce eddy current losses in different directions, thereby enhancing the thrust force and efficiency of a linear motor.

In some embodiments, the stator yoke part 2 is wound along a first circumferential direction, and an axis of the first circumferential direction is parallel or coincident with the axial direction X.

For example, the axis of the spiral winding of the winding piece is parallel or coincident with the axial direction X of the stator magnetic core 10. In this way, the plurality of turns of conductors of the winding piece are distributed along the radial direction of the stator magnetic core 10. It will be noted that during the actual operation of the linear motor, the magnetic circuit direction inside the linear motor changes. Therefore, in some embodiments of the present disclosure, by setting the distribution direction of the plurality of turns of conductors in the radial direction of the stator yoke part 2 to be different from the distribution direction (i.e., the axial direction X) of the plurality of first laminations 11, the stator tooth part 1 and the stator yoke part 2 can reduce eddy current losses in different directions, thereby enhancing the thrust force and efficiency of a linear motor.

In some embodiments, the stator yoke part 2 comprises a plurality of second laminations stacked in a second direction, and the axial direction X intersects the second direction.

For example, the plurality of second laminations are stacked in a direction intersecting the axial direction X of the stator magnetic core 10. In this way, the stacking direction of the plurality of second laminations intersects the axial direction of the stator magnetic core 10. It will be noted that during the actual operation of the linear motor, the magnetic circuit direction inside the linear motor changes. Therefore, in some embodiments of the present disclosure, by setting the stacking direction of the plurality of second laminations to intersect the axial direction of the stator magnetic core 10, the stator tooth part 1 and the stator yoke part 2 can reduce eddy current losses in different directions, thereby enhancing the thrust force and efficiency of a linear motor.

In some embodiments, the axial direction X and the second direction are arranged perpendicularly.

For example, the plurality of second laminations are stacked in a direction perpendicular to the axial direction X of the stator magnetic core 10. In this way, the stacking direction of the plurality of second laminations is perpendicular to the axial direction X of the stator magnetic core 10, i.e., the stacking direction of the plurality of second laminations is the radial direction of the stator magnetic core 10.

It will be noted that during the actual operation of the linear motor, the magnetic circuit direction inside the linear motor changes. Therefore, in some embodiments of the present disclosure, by setting the stacking direction of the plurality of second laminations to be perpendicular to the axial direction of the stator magnetic core 10, the stator tooth part 1 and the stator yoke part 2 can reduce eddy current losses in different directions (axial and radial), thereby enhancing the thrust force and efficiency of a linear motor.

An embodiment of the stator magnetic core 10 of the present disclosure is described below with reference to FIG. 1 to FIG. 7.

The stator magnetic core 10 can be applied to a three-phase permanent magnet synchronous linear motor, and is composed of a stator tooth part 1 and a stator yoke part 2. The stator tooth part 1 is formed by laminating a plurality of first laminations 11 in the axial direction X. The stator yoke part 2 is formed by circumferentially winding a silicon steel sheet. A positioning protrusion 31 is arranged on an inner peripheral wall of the stator tooth part 1.

When assembling the installation structure, the positioning protrusion 31 engages with a slot on the installation structure to prevent the stator tooth part 1 from rotating, thereby ensuring that the wire passing slots 14 of the stator magnetic core 10 are aligned. The outer peripheral wall of the stator tooth part 1 is uniformly provided with three wire passing slots 14 along the circumferential direction. The three wire passing slots 14 correspond to the three-phase wires of the stator winding. For example, the stamped and laminated stator tooth part 1 mates with the installation structure in an interference fit, has the characteristic of high precision, and can mate precisely with the installation structure. It will be noted that alignment means that the two ends along the axial direction X of any two of the three wire passing slots 14 are located in the same plane.

The stator winding is wound around the stator yoke part 2 and placed on the stator tooth part 1. When the linear motor operates, magnetic lines of force mainly distribute along the radial direction inside the stator tooth part 1 and along the axial direction X inside the stator yoke part 2. The stator tooth part 1, formed by a plurality of first laminations 11 stacked in the axial direction X, can significantly reduce the eddy current losses generated inside the stator tooth part 1. The structure of the stator yoke part 2 formed by circumferentially winding silicon steel sheets has an effect equivalent to that of a plurality of first laminations 11 stacked in the axial direction X in reducing the eddy current losses of the stator tooth part 1, and can significantly reduce the eddy current losses in the stator yoke part 2.

A plurality of insertion parts 21 are arranged below the stator yoke part 2. The insertion parts 21 have the same thickness as the stator tooth part 1, and the insertion parts 21 of the stator yoke part 2 are inserted into corresponding insertion holes 13 in the stator tooth part 1, thereby fixing the stator yoke part 2 to the stator tooth part 1. The thickness of the insertion parts 21 and the stator tooth part 1 refers to their dimensions parallel to the axial direction X.

Since the process for winding the iron core of axial flux motors is relatively mature, the stator yoke part 2 with a plurality of insertion parts 21 in some embodiments of the present disclosure has high process feasibility and also has the effect of reducing the eddy current losses of the stator yoke part 2. Furthermore, through optimized design, the assembly process of the stator yoke part 2 and the stator tooth part 1 can be further improved.

The stator yoke part 2 uses a process of stamping followed by winding. The insertion parts 21 are formed by stamping, and a trapezoidal punch is used for all insertion parts 21. If a square punch is used, interference will occur between the clearance slot 133 and local areas of the stator tooth part 1 during assembly. Furthermore, if the clearance slot 133 (rounded corner) is not provided, the life of the punch will be greatly shortened, leading to increased costs. Therefore, by using the same trapezoidal punch with rounded corners, stamping out the insertion part 21 while winding, the process cost can be reduced and the process assembly requirements can be met.

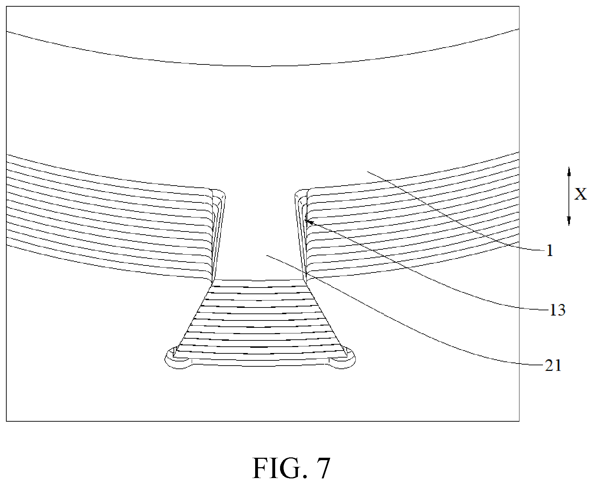

Additionally, as shown in FIG. 7, when the insertion part 21 is inserted into the insertion hole 13 on the stator tooth part 1, because of the rounded corners formed between the side surfaces and the bottom surface of the insertion part 21, there is a risk that the bottom end surface of the insertion part 21 cannot fit with the end surface of the insertion hole 13. By using a trapezoidal punch, a certain inclination angle toward the centerline of the insertion part 21 is formed between the bottom end surface and the side surfaces of the insertion part 21. This can allow the stator yoke part 2 and the stator tooth part 1 to fit together even when rounded corners exist between the side surfaces and the bottom surface of the insertion part 21, ensuring structural reliability.

Since the same punch is used for stamping, the width of the insertion part 21 of the wound stator yoke part 2 will vary along the radial direction. The closer to the outer edge, the wider the insertion part 21 becomes, thereby the insertion part 21 takes on a dovetail trapezoidal shape as shown in FIG. 7. The axially X-laminated stator tooth part 1 in FIG. 1 is stamped at fixed positions to form insertion holes 13. When the insertion part 21 is inserted into the insertion hole 13, because the opening width of the insertion hole 13 is smaller than the width at its bottom, the insertion part 21 is prevented from slipping out of the insertion hole 13, strengthening the fixation between the stator tooth part 1 and the stator yoke part 2.

In the circumferential direction of the stator yoke part 2, the insertion part 21 has opposite first side walls 211. Ends of the two first side walls 211 adjacent to the through hole 3 are spaced apart from the inner wall of the insertion hole 13. When the insertion part 21 is inserted into the insertion hole 13, the part of the insertion part 21 near the bottom of the insertion hole 13 interferes with the rounded corners inside the insertion hole 13. By spacing the ends of the two first side walls 211 adjacent to the through hole 3 from the inner wall of the insertion hole 13, interference during installation can be avoided, ensuring that the insertion part 21 of the stator yoke part 2 can be normally inserted into the insertion hole 13 of the stator tooth part 1 and complete the fixation of the stator yoke part 2 and the stator tooth part 1.

Therefore, the axially X-laminated stator tooth part 1 mates with the installation structure in an interference fit, and the positioning protrusion 31 is embedded into the slot of the installation structure to prevent relative rotation between the two. Then, the circumferentially spirally wound stator yoke part 2 inserts the insertion parts 21 into the insertion holes 13 of the stator tooth part 1 to achieve fixation with the stator tooth part 1. In this way, the spirally wound stator yoke part 2 and the axially X-laminated stator tooth part 1 form a mechanical connection. Laser welding is further used to consolidate and strengthen the connection strength between the stator yoke part 2 and the stator tooth part 1.

In summary, the stator magnetic core of some embodiments of the present disclosure has at least the following advantages compared to the related art:
1. The combined structure of the circumferentially spirally wound stator yoke part 2 and the axially X-laminated stator tooth part 1 can significantly reduce the eddy current losses of the stator magnetic core 10 while ensuring high motor thrust and efficiency.
2. The processes of circumferentially spirally winding the stator yoke part 2 and axially X-laminating the stator tooth part 1 have high feasibility.
3. The stator tooth part 1 and the stator yoke part 2 form a mechanical connection through the insertion parts 21 and the insertion holes 13, and the connection is strengthened by laser welding, making the structure secure and highly reliable.
4. The inner circumference of the stator tooth part 1 is formed by stamping, having the characteristic of high precision, allowing it to mate precisely with the installation structure (e.g., a shaft).
5. The positioning protrusion 31 formed by stamping on the inner circumference of the stator tooth part 1 can improve the assembly precision with the installation structure, thereby ensuring the alignment of the wire passing slots 14 for the three-phase wires of the stator magnetic core 10.
6. The inner circumference of the stator yoke part 2 is formed by spiral winding, and its precision is relatively limited, allowing it to form a clearance mate with the installation structure.
7. The utilization rate of the stator magnetic core 10 is high.

Some embodiments of the present disclosure also provide a stator assembly.

According to an embodiment of the present disclosure, a stator assembly includes: a stator magnetic core 10 and a stator winding. The stator magnetic core 10 is the stator magnetic core 10 according to any of the above embodiments. The stator winding is arranged on the stator tooth part 1 and sleeves over the stator yoke part 2.

Therefore, the stator tooth part 1 can support the stator winding, and the stator yoke part 2 can limit the stator winding, thereby enhancing the structural stability of the stator winding. Moreover, the stator winding sleeves over the stator yoke part 2.

Furthermore, the stator winding can fully utilize the space between the stator tooth part 1 and the stator yoke part 2, thereby improving space utilization, reducing the overall structural size of the stator assembly, and facilitating the miniaturization design of the stator assembly.

When the linear motor operates, magnetic lines of force mainly extend along the radial direction inside the stator tooth part 1 and along the axial direction X inside the stator yoke part 2. The stator tooth part 1, formed by a plurality of first laminations 11 stacked in the axial direction X, can significantly reduce the eddy current losses generated inside the stator tooth part 1. The circumferentially wound winding piece has an effect equivalent to that of a plurality of first laminations 11 stacked in the axial direction X in reducing the eddy current losses of the stator tooth part 1, and can significantly reduce the eddy current losses in the stator yoke part 2.

In the stator assembly according to the embodiment of the present disclosure, the stator tooth part 1 is formed by stacking a plurality of first laminations 11 in the axial direction X to reduce the eddy current losses of the stator tooth part 1, and the stator yoke part 2 is formed into a winding piece or a stacking piece to reduce the eddy current losses of the stator yoke part 2. In this way, the eddy current losses of the stator magnetic core 10 can be significantly reduced, thereby enhancing the thrust force and efficiency of a linear motor.

Some embodiments of the present disclosure also provide a linear motor.

According to an embodiment of the present disclosure, a linear motor includes: a stator assembly and a forcer assembly. The stator assembly is the stator assembly according to any of the above embodiments. The forcer assembly is movably mated with the stator assembly.

In the linear motor according to the embodiment of the present disclosure, the stator tooth part 1 of its stator assembly is formed by stacking a plurality of first laminations 11 in the axial direction X to reduce the eddy current losses of the stator tooth part 1, and the stator yoke part 2 is formed into a winding piece or a stacking piece to reduce the eddy current losses of the stator yoke part 2. In this way, the eddy current losses of the stator magnetic core 10 can be significantly reduced, thereby enhancing the thrust force and efficiency of a linear motor.

Some embodiments of the present disclosure also provide a suspension system, comprising the linear motor according to any of the above embodiments. One of the stator assembly and the forcer assembly is configured to be connected to a vehicle body, and the other of the stator assembly and the forcer assembly is configured to be connected to a wheel.

Therefore, the linear motor can be configured to transmit forces and moments acting between the wheel and the vehicle body, and buffer impact forces transmitted from uneven road surfaces to the vehicle body, serving a damping role to ensure smooth vehicle driving.

In the suspension system according to the embodiment of the present disclosure, the stator tooth part 1 of its stator assembly is formed by stacking a plurality of first laminations 11 in the axial direction X to reduce the eddy current losses of the stator tooth part 1, and the stator yoke part 2 is formed into a winding piece or a stacking piece to reduce the eddy current losses of the stator yoke part 2. In this way, the eddy current losses of the stator magnetic core 10 can be significantly reduced, thereby enhancing the thrust force and efficiency of a linear motor.

Some embodiments of the present disclosure also provide a vehicle comprising the suspension system according to any of the above embodiments.

In the vehicle according to the embodiment of the present disclosure, the stator tooth part 1 of its stator assembly is formed by stacking a plurality of first laminations 11 in the axial direction X to reduce the eddy current losses of the stator tooth part 1, and the stator yoke part 2 is formed into a winding piece or a stacking piece to reduce the eddy current losses of the stator yoke part 2. In this way, the eddy current losses of the stator magnetic core 10 can be significantly reduced, thereby enhancing the thrust force and efficiency of a linear motor.

In the description of the present disclosure, it will be understood that terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," etc., indicate orientations or positional relationships based on those shown in the accompanying drawings. They are used only to facilitate describing the present disclosure and simplify the description, and do not indicate or imply that the referred device or element must have a specific orientation or be constructed and operated in a specific orientation. Therefore, they will not be construed as limiting the present disclosure.

Furthermore, terms "first" and "second" are used for descriptive purposes only and will not be construed as indicating or implying relative importance or implicitly indicating the number of technical features referred to. Thus, features defined with "first" or "second" may explicitly or implicitly include one or more of such features. In the description of the present disclosure, "plurality" means two or more, unless otherwise explicitly and specifically defined.

In the present disclosure, unless otherwise explicitly specified and defined, terms such as "install," "connect," "link," "fix," etc., will be understood broadly. For example, it may be a fixed connection, a detachable connection, or an integral connection; it may be a mechanical connection, an electrical connection, or communication; it may be a direct connection or an indirect connection through an intermediary. It may be internal communication between two elements or interaction between two elements. Those of ordinary skill in the art will understand the specific meanings of these terms in the present disclosure based on specific situations.

In the present disclosure, unless otherwise explicitly specified and defined, the first feature being "on" or "under" the second feature may mean that the first and second features are in direct contact, or that the first and second features are in indirect contact through an intermediary. Moreover, the first feature being "above," "over," or "on top of" the second feature may mean that the first feature is directly above or obliquely above the second feature, or merely that the horizontal height of the first feature is higher than that of the second feature. The first feature being "below," "under," or "beneath" the second feature may mean that the first feature is directly below or obliquely below the second feature, or merely that the horizontal height of the first feature is lower than that of the second feature.

In the description of this specification, references to terms such as "an embodiment," "some embodiments," "example," "specific example," or "some examples," etc., mean that specific features, structures, materials, or characteristics described in connection with the embodiment or example are included in at least one embodiment or example of the present disclosure. In this specification, schematic expressions of the above terms do not necessarily refer to the same embodiment or example. Furthermore, the described specific features, structures, materials, or characteristics may be combined in any suitable manner in one or more embodiments or examples. Additionally, without contradicting each other, those skilled in the art can combine and combine the different embodiments or examples described in this specification and the features of the different embodiments or examples.

Although embodiments of the present disclosure have been shown and described, those of ordinary skill in the art will understand that various changes, modifications, substitutions, and alterations can be made to these embodiments without departing from the principles and spirit of the present disclosure. The scope of the present disclosure is defined by the claims and their equivalents.

## Claims

1. A stator magnetic core (10), comprising:
a stator tooth part (1), the stator tooth part (1) comprising a plurality of first laminations (11) stacked in an axial direction (X) of the stator magnetic core (10); and
a stator yoke part (2), the stator yoke part (2) being formed into a winding piece or a stacking piece, the stator yoke part (2) being connected to the stator tooth part (1).

2. The stator magnetic core (10) according to claim 1, wherein the stator yoke part (2) is formed with a first connection structure, the stator tooth part (1) is formed with a second connection structure, and the first connection structure mates with the second connection structure to realize a connection between the stator tooth part (1) and the stator yoke part (2).

3. The stator magnetic core (10) according to claim 2, wherein the first connection structure and the second connection structure are mated by insertion.

4. The stator magnetic core (10) according to claim 3, wherein the first connection structure is formed into an insertion part (21), and the second connection structure is formed into an insertion hole (13).

5. The stator magnetic core (10) according to claim 4, wherein the second connection structure is provided with a plurality of insertion holes (13), the first connection structure is provided with a plurality of insertion parts (21), and the plurality of insertion parts (21) correspond one-to-one with the plurality of insertion holes (13).

6. The stator magnetic core (10) according to claim 4, wherein the stator yoke part (2) comprises a yoke body (20) and the insertion part (21);
along a stacking direction of the plurality of first laminations (11), the yoke body is arranged on one side of the stator tooth part (1), and the insertion part (21) is connected to a side of the yoke body facing the stator tooth part (1).

7. The stator magnetic core (10) according to claim 4, wherein the stator tooth part (1) is provided with a first central hole (12), the insertion hole (13) is formed by an outward recess from the first central hole (12), and the insertion hole (13) communicates with the first central hole (12).

8. The stator magnetic core (10) according to claim 7, wherein in a radial direction of the stator tooth part (1), a cross-sectional area of the insertion hole (13) decreases in a direction toward the first central hole (12), and a shape of the insertion hole (13) matches a shape of the insertion part (21).

9. The stator magnetic core (10) according to claim 8, wherein in a circumferential direction of the stator yoke part (2), the insertion part (21) has two opposite first side walls (211), and ends of the two first side walls (211) adjacent to the first central hole (12) are spaced apart from an inner wall of the insertion hole (13).

10. The stator magnetic core (10) according to claim 5, wherein in a circumferential direction of the stator tooth part (1), the insertion hole (13) has two opposite second side walls (131), the two second side walls (131) are connected by a third side wall (132), and a recessed clearance slot (133) is arranged at a corner between the third side wall (132) and either of the two second side walls (131).

11. The stator magnetic core (10) according to claim 10,
wherein an inner peripheral wall of the clearance slot (133) is formed into an arc-shaped surface (1331).

12. The stator magnetic core (10) according to any one of claims 1 to 11, wherein at least a part of the stator yoke part (2) is located on one side of the stator tooth part (1), thereby forming a winding slot (4) between the stator yoke part (2) and the stator tooth part (1), and the winding slot (4) is configured to wind a coil.

13. The stator magnetic core (10) according to any one of claims 1 to 12, wherein at least one of the stator tooth part (1) and the stator yoke part (2) is provided with a positioning protrusion (31).

14. The stator magnetic core (10) according to claim 13, wherein the positioning protrusion (31) is formed on the stator tooth part (1).

15. The stator magnetic core (10) according to any one of claims 1 to 14, wherein an outer peripheral wall of the stator tooth part (1) is provided with at least one wire passing slot (14).

16. The stator magnetic core (10) according to claim 15, wherein the at least one wire passing slot (14) comprises a plurality of wire passing slots (14), and the plurality of wire passing slots (14) are uniformly spaced apart.

17. The stator magnetic core (10) according to any one of claims 1 to 16, wherein a winding direction or a stacking direction of the stator yoke part (2) is different from a stacking direction of the plurality of first laminations.

18. The stator magnetic core (10) according to claim 17, wherein the stator yoke part (2) is wound along a first circumferential direction, and an axis of the first circumferential direction is parallel or coincident with the axial direction (X).

19. The stator magnetic core (10) according to claim 17, wherein the stator yoke part (2) comprises a plurality of second laminations stacked in a second direction, and the axial direction (X) intersects the second direction.

20. The stator magnetic core (10) according to claim 19, wherein the axial direction (X) and the second direction are arranged perpendicularly.

21. A stator assembly, comprising:
a stator magnetic core (10), the stator magnetic core (10) being the stator magnetic core (10) according to any one of claims 1 to 20; and
a stator winding, the stator winding being arranged on the stator tooth part (1) and sleeving over the stator yoke part (2).

22. A linear motor, comprising:
a stator assembly, the stator assembly being the stator assembly according to claim 21; and
a forcer assembly, the forcer assembly being movably mated with the stator assembly.

23. A suspension system, comprising the linear motor according to claim 22, one of the stator assembly and the forcer assembly being configured to be connected to a vehicle body, and the other of the stator assembly and the forcer assembly being configured to be connected to a wheel.

24. A vehicle, comprising the suspension system according to claim 23.
